Europäisches Patentamt

European Patent Office

Office européen des brevets

(11) Numéro de publication: **0 449 673 B1**

(19)

(12)

# FASCICULE DE BREVET EUROPEEN

(45) Date de publication du fascicule du brevet: **30.08.95** (51) Int. Cl.6: **C01F 5/30**

(21) Numéro de dépôt: **91400352.0**

(22) Date de dépôt: **12.02.91**

(54) **Particules de chlorure de magnésium à structure tronconique, composante catalytique supportée sur ces particules, polyolèfines obtenues à partir de cette composante catalytique, procédés de fabrication de ces produits.**

(30) Priorité: **19.02.90 FR 9001948**

(43) Date de publication de la demande:
**02.10.91 Bulletin 91/40**

(45) Mention de la délivrance du brevet:
**30.08.95 Bulletin 95/35**

(84) Etats contractants désignés:
**AT BE DE ES FR GB IT NL SE**

(56) Documents cités:
**FR-A- 2 339 574**
**FR-A- 2 434 180**
**FR-A- 2 464 965**

(73) Titulaire: **ELF ATOCHEM S.A.**
**4 & 8, Cours Michelet**
**La Défense 10**
**F-92800 Puteaux (FR)**

(72) Inventeur: **Duranel, Laurent**
**Ouartier Bergoué**
**F-64370 Arthez de Bearn (FR)**
Inventeur: **Roche, Jean-Pierre**
**1, Rue Voltaire**
**F-64000 Pau (FR)**

(74) Mandataire: **Foiret, Claude et al**
**ELF ATOCHEM S.A.**
**Département Propriété Industrielle**
**La Défense 10 - Cedex 42**
**F-92091 Paris-La-Défense (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne des particules de chlorure de magnésium ($MgCl_2$) de forme nouvelle ainsi que leur procédé de fabrication. Ces particules de $MgCl_2$ peuvent être utilisées comme support catalytique, en particulier dans les composantes de catalyseur du type Ziegler Natta. Les polyoléfines obtenues lors de la polymérisation des oléfines en présence de la composante catalytique dans laquelle se trouve ce $MgCl_2$ possèdent également une structure particulière. Ces composantes catalytiques et les polyoléfines obtenues en présence de ces composantes font également partie de l'invention.

Le $MgCl_2$ selon l'invention est constitué de particules poreuses se présentant, au microscope, sous la forme de sensiblement deux troncs de cône droit réunis par les plus grandes bases, incurvés, vers l'axe de symétrie perpendiculaire aux bases, à l'intersection de l'enveloppe des troncs de cône avec deux plans orthogonaux passant par ledit axe de symétrie. Les deux troncs de cône sont généralement sensiblement identiques et symétriques et tels que le rapport $\frac{D}{h}$ du plus grand diamètre "D" des bases à la hauteur "h" totale des deux troncs de cône réunis est de 1 à 2 et plus particulièrement de 1,4 à 1,7. Le rapport $\frac{D}{d}$ habituellement retenu du plus grand diamètre "D" de la particule au plus grand diamètre "d" des petites bases des troncs de cône est de 2 à 4 et plus particulièrement de 2,5 à 3,5.

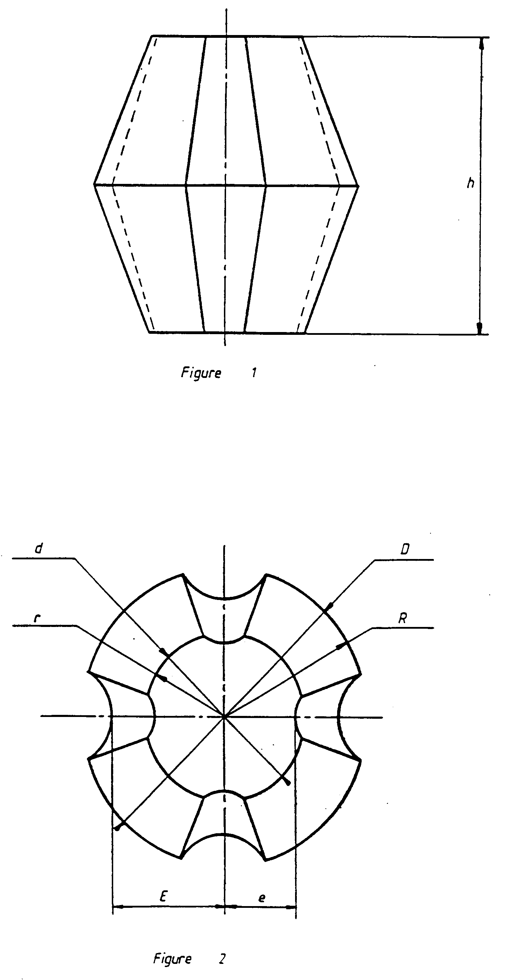

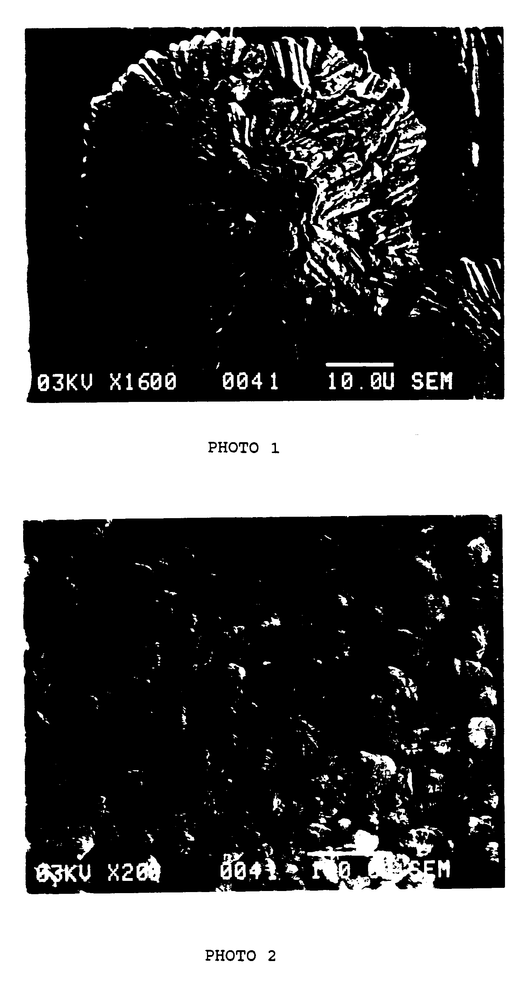

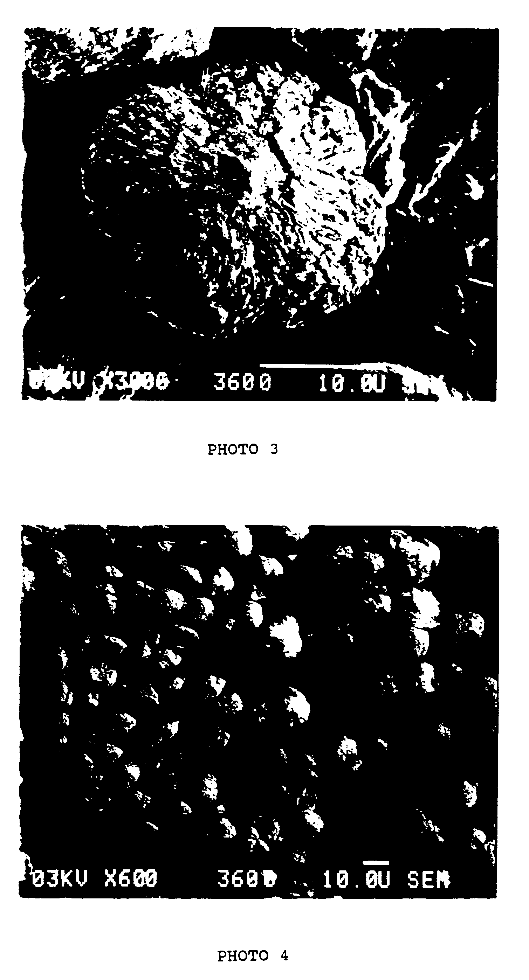

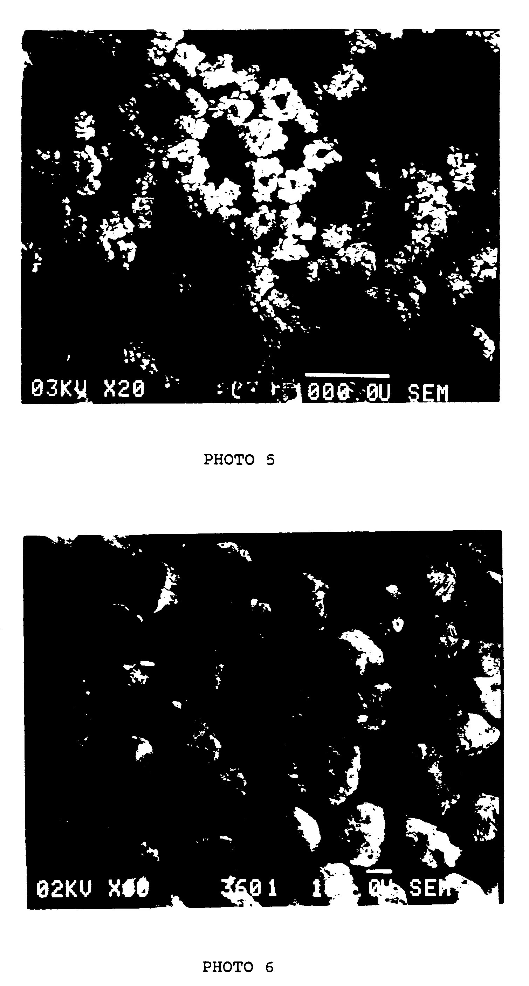

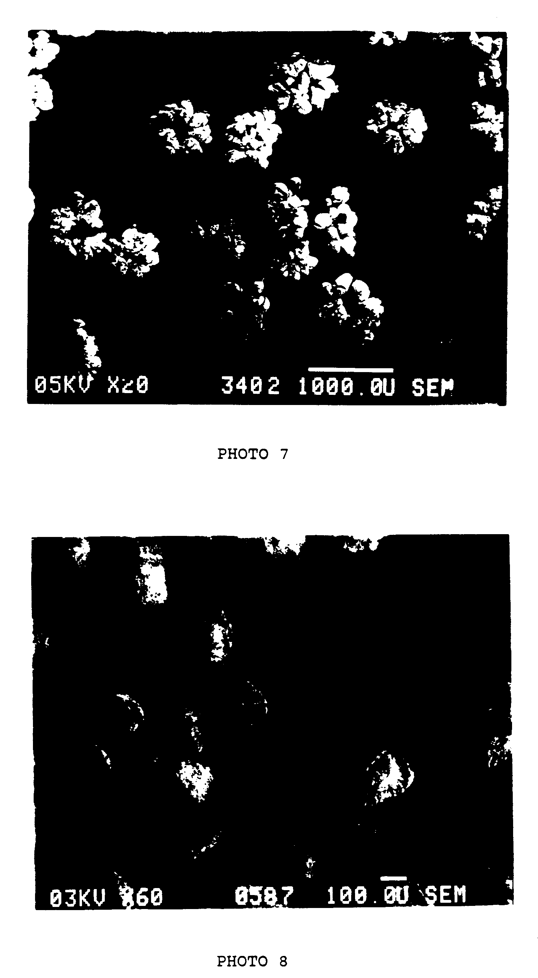

Les quatre incurvations sur chacun des deux troncs de cône, séparées une à une à sensiblement 90°, peuvent être définies par rapport au plus grand rayon "R" de la plus grande base des troncs de cône et à la distance "E" séparant le centre de cette plus grande base des troncs de cône sur cette même base du point d'incurvation maximum. Ce rapport $\frac{R}{E}$ est généralement de 1,1 à 1,5 et plus particulièrement de 1,2 à 1,4. Ces incurvations suivent habituellement les deux troncs de cône de la plus grande base à la plus petite base. Dans ces conditions le rapport $\frac{r}{e}$ peut être de 1,1 à 1,5 et plus particulièrement de 1,2 à 1,4, "r" étant le plus grand rayon d'une des deux petites bases des troncs de cône et "e" représentant la distance séparant le centre de cette petite base du point d'incurvation maximum sur cette même base. Les figures 1 et 2 en annexe schématisent une particule en vue de face et en vue de dessus.

Ces particules de $MgCl_2$ possèdent une surface rugueuse et ravinée qui assure une excellente porosité. Cette porosité est généralement de 0,5 à 3,5 $cm^3/g$ et mieux de 1,5 à 2,5 $cm^3/g$ ; il peut être estimé que dans ces particules, les pores de rayons de 5 à 100 nm représentent jusqu'à 50 % du volume poreux. Leur surface spécifique est habituellement de 100 à 400 $m^2/g$ et mieux de 200 à 300 $m^2/g$.

La taille des particules de $MgCl_2$ est généralement de 10 à 100 $\mu$m pour une distribution granulométrique resserrée. Habituellement la largeur de distribution granulométrie

$$\frac{D90}{D10}$$

est inférieure à 4 et plus généralement inférieur à 3, D90 et D10 étant respectivement les diamètres en-dessous desquels on trouve 90 % et 10 % en poids des particules.

Ces particules sont obtenues par précipitation par le dioxane 1-4 de $MgCl_2$ en solution dans un alcool, ladite solution étant émulsionnée dans un milieu dispersant, et les particules de $MgCl_2$ récupérées étant ensuite traitées pour éliminer totalement le dioxane 1-4.

Le $MgCl_2$ à traiter est préalablement mis en solution dans un alcool, dans les conditions habituelles de dissolution, à une concentration au plus égale à la limite de saturation à la température de traitement ultérieur de la solution. L'alcool utilisé est de préférence un monoalcool contenant de 1 à 20 atomes de carbone, le n-butanol étant le plus recommandé.

La solution de $MgCl_2$ dans l'alcool est mise en émulsion dans un milieu dispersant, qui est un liquide non solvant et inerte vis à vis de la solution, à une température pouvant varier de la température ambiante à 100°C. L'émulsion, bien que cela ne soit pas nécessaire, peut se faire en présence d'un tensio-actif de préférence non ionique. Le liquide dispersant est de préférence choisi parmi les hydrocarbures lourds possédant au moins 8 atomes de carbone dans leur molécule, tels que les huiles paraffiniques de viscosité à 20°C comprise de 0,1 à 1 Pa.s. Dans l'émulsion, le rapport volumique du milieu dispersant sur la phase alcoolique, représentée par la solution de $MgCl_2$ dans l'alcool, est habituellement de 1 à 5 et mieux de 2 à 4.

L'agitation doit, comme le sait l'homme de métier, être suffisante pour maintenir la phase alcoolique sous forme de gouttelettes dans le milieu dispersant. Cela étant respecté, les conditions d'agitation ne semblent pas des plus critiques du fait, en particulier, d'une meilleure stabilité de l'émulsion aux températures du procédé qu'aux températures supérieures.

Dans cette émulsion est ajoutée l'agent de précipitation qui est le dioxane 1-4. Il est de préférence ajouté à l'émulsion sous agitation pour assurer une cristallisation brutale du $MgCl_2$. La vitesse d'introduction du dioxane 1-4 ne semble pas critique ; elle peut se faire le plus rapidement possible ou en coulée lente dans l'émulsion. La température du dioxane 1-4 au moment de son introduction dans la dispersion n'est également pas critique. Par contre, afin d'assurer une excellente précipitation de $MgCl_2$, il est recommandé d'utiliser au moins 2 volumes de dioxane 1-4 pour 1 volume de solution alcoolique, et d'éviter que la température du milieu réactionnel descende en-dessous de sensiblement 20°C..

Le $MgCl_2$ précipité se présente sous la forme de particules telles que définies précédemment. Ce $MgCl_2$ est récupéré sous forme de complexe $MgCl_2$, dioxane 1-4 contenant en poids, en général, de l'ordre de 67 % de dioxane et 33 % de $MgCl_2$. Ce complexe doit être traité pour éliminer totalement le dioxane 1-4 du $MgCl_2$. Il est en effet connu que dans certaines applications du $MgCl_2$ la présence de dioxane 1-4 est néfaste, en particulier dans l'utilisation du $MgCl_2$ comme support de composante catalytique de polymérisation du type Ziegler ; le dioxane 1-4 présente un effet poison du catalyseur.

Ce dioxane peut être éliminé du $MgCl_2$ par tous les moyens connus, tel que par chauffage sous vide pendant un temps suffisant comme par exemple à 200-208°C sous un vide de 1 à 2 KPa, ou encore par fluidisation à chaud du complexe à, par exemple, 400°C sous courant de gaz inerte.

Un moyen particulièrement intéressant d'élimination du dioxane 1-4 du $MgCl_2$ consiste à traiter le complexe obtenu par un composé d'aluminium choisi parmi les aluminoxanes non halogénés, les aluminosiloxanes non halogénés ou encore parmi les alkylaluminiums $AlR_3$ où R représente un radical alcoyle contenant de 1 à 20 atomes de carbone. Le dioxane 1-4, déplacé du $MgCl_2$, forme un complexe avec le composé d'aluminium. Pour ce faire le complexe $MgCl_2$, dioxane 1-4 est remis en suspension dans un liquide inerte solvant du composé d'aluminium et du nouveau complexe formé : composé d'aluminium - dioxane 1-4 après ajout dudit composé d'aluminium. Le liquide inerte servant à la remise en suspension du complexe de $MgCl_2$ peut être par exemple choisi parmi les hydrocarbures saturés ou insaturés tels que l'hexane, l'heptane, le benzène, le toluène, les composés partiellement ou totalement chlorés possédant un moment dipolaire plus important tels que $CH_2Cl_2$, $C_2H_4Cl_2$, $CCl_4$, $C_2Cl_4$ ou l'orthodichlorobenzène, ou encore parmi les composés aromatiques comportant des groupements hydrocarbonés et/ou au moins un atome de chlore. Ce traitement par le composé d'aluminium peut se faire sous agitation à température ambiante ou à chaud éventuellement sous pression pour accélérer la réaction. La température de traitement n'est pas critique, elle n'est limitée que par la température d'ébullition du liquide inerte servant à la mise en suspension. Il est recommandé d'utiliser dans la suspension une quantité de composé d'aluminium telle que le rapport molaire Al/dioxane 1-4 soit supérieur ou égal à 2. L'excès d'aluminium n'est pas limitatif sinon pour des questions économiques et de facilité de lavage. Plutôt que d'utiliser un grand excès de composé d'aluminium dans la suspension, il est préférable pour éliminer totalement le dioxane 1-4 d'effectuer plusieurs traitements du $MgCl_2$ par le composé d'aluminium. Après les lavages et rinçages habituels pour éliminer les dernières traces du complexe de composé d'aluminium et de dioxane 1-4 et éventuellement séchage, le $MgCl_2$ récupéré est sensiblement pur et contient plus de 24 % en poids de Mg, et conserve la forme et les caractéristiques précédemment définies.

Quand les particules de $MgCl_2$ sont destinées à être utilisées comme support de métal de transition pour les composantes de catalyseur du type Ziegler Natta, il peut être intéressant de ne pas éliminer la totalité du composé d'aluminium ayant servi dans le dernier traitement d'élimination du dioxane 1-4.

A l'examen aux rayons X le $MgCl_2$ obtenu est un produit cristallin présentant certains pics de diffraction, dont celui situé à environ 0,181-0,184 nm (nanomètre) caractéristique du $MgCl_2$, mais aussi trois pics supplémentaires situés à environ : 0,75-0,85 nm, 0,70-0,75 nm et 0,50-0,52 nm. Ces mesures sont faites au moyen d'un appareil PHILIPS avec les caractéristiques suivantes :

- bande de divergence de 1°
- fente de convergence de 0,1°
- filtre au nickel
- tube foyer normal au cuivre
- générateur PW 1130
- goniomètre PW 1050/25
- tension d'accélération = 50 KV
- intensité d'émission = 30 mA
- vitesse de rotation du goniomètre : 1°(2Θ)/min.

De par sa structure originale, le $MgCl_2$ obtenu présente les mêmes avantages qu'un $MgCl_2$ de forme sphérique tout en atténuant ses inconvénients. Afin d'obtenir une bonne coulabilité, mesurée selon la norme ASTM D-1895, du $MgCl_2$, et plus particulièrement du polymère ou copolymère final, quand il est utilisé comme support catalytique, ont été recherchées des structures particulières du $MgCl_2$. La forme sphérique a été particulièrement recherchée dans le cas de la catalyse pour que la particule finale de polymère ou de copolymère, reproduisant sensiblement de façon homothétique la particule de support, possède cette qualité de coulabilité.

De telles particules sphériques ont en particulier été décrites dans la demande de brevet FR 2 434180.

Dans ce document, les particules sphériques de support de catalyseur sont obtenues par refroidissement rapide d'une émulsion constituée d'un produit d'addition de $MgCl_2$ avec par exemple un alcool et d'un liquide immiscible avec le produit d'addition.

L'inconvénient de cette sphéricité est qu'elle facilite l'accumulation des charges électrostatiques dans les réacteurs et les canalisations occasionnant en particulier des collages de poudre aux parois. La structure du $Mgcl_2$ selon l'invention permet d'atténuer ce type d'inconvénient.

Une composante catalytique de catalyseur du type Ziegler peut être obtenue par combinaison du $MgCl_2$ selon l'invention avec un composé de métal de transition. C'est ainsi par exemple qu'une telle composante peut être obtenue par dépôt sur le $MgCl_2$ d'un composé du titane et/ou du vanadium de préférence halogéné et plus particulièrement du $TiCl_4$, $TiCl_3$, $VCl_4$, $VCl_3$ ou $VOCl_3$. Cette composante catalytique associée à un cocatalyseur choisi parmi les composés organométalliques des métaux I à III du tableau périodique et plus particulièrement les composés d'aluminium, sert de catalyseur de polymérisation ou copolymérisation des oléfines linéaires ou ramifiées comme l'éthylène, le propylène, le butène-1, l'hexène-1, l'octène-1, le 4-méthylpentène-1, le butadiène-1-3, le 1-9 décadiène.

Au moins un donneur d'électrons peut être ajouté, lors de sa fabrication à la composante catalytique et/ou au cocatalyseur. Le donneur d'électrons peut être par exemple choisi parmi les acides de Lewis, les esters des acides oxygénés, las cétones, les aldéhydes, les éthers, les amines, les amides, les composés du silicium tels que les silanes, et les composés du phosphore tels que les phosphines et les phosphoramides, les préférés étant les esters ou polyesters alcoylés d'acides aromatiques, les mono ou diéthers d'alcoyle, les alkoxysilanes et les alkylalkoxysilanes.

Le catalyseur obtenu à partir d'une composante fabriquée à partir du $MgCl_2$ de l'invention convient à tous les types de polymérisation des oléfines : en haute et basse pression, en suspension, en phase gazeuse ou en masse.

La composante catalytique obtenue à partir du $MgCl_2$ selon l'invention est également constituée de particules se présentant au microscope sous la forme de sensiblement deux troncs de cône droit réunis par les plus grandes bases, incurvés, vers l'axe de symétrie perpendiculaire aux bases, à l'intersection de l'enveloppe des troncs de cône avec deux plans orthogonaux passant par ledit axe de symétrie. Les deux troncs de cône sont généralement sensiblement identiques et symétriques et tels que le rapport $\frac{D}{h}$ du plus grand diamètre "D" des bases à la hauteur "h" totale des deux troncs de cône réunis est de 1 à 2 et plus particulièrement de 1,4 à 1,7. Le rapport habituellement retenu du plus grand diamètre "D" de la particule de composante au plus grand diamètre "d" des petites bases des troncs de cône est de 2 à 4 et plus particulièrement 2,5 à 3,5. Les quatres incurvations sur chacun des deux troncs de cône, séparées une à une à sensiblement 90°, peuvent être définies par rapport au plus grand rayon "R" de la plus grande base des troncs de cône et à la distance "E" séparant le centre de cette plus grande base des troncs de cône du point d'incurvation maximum sur cette même base. Ce rapport $\frac{R}{E}$ est généralement de 1,1 à 1,5 et plus particulière et plus particulièrement de 1,2 à 1,4.

Ces incurvations, beaucoup plus accentuées aux plus grandes bases qu'aux petites bases des troncs de cône, suivent habituellement chaque tronc de cône de la plus grande base à la plus petite base. Dans ces conditions le rapport $\frac{r}{e}$ peut être de 1,1 à 1,5, et plus particulièrement de 1,2 à 1,4, "r" étant le plus grand rayon d'une des deux petites bases des troncs de cône et "e" représentant la distance séparant le centre de cette petite base du point d'incurvation maximum sur cette même base. Les figures 1 et 2 en annexe schématisent également une particule de composante catalytique en vue de face et en vue de dessus.

Ces particules de composante catalytique possèdent une surface sensiblement lisse ; la porosité de ces particules est généralement de 1 à 3 $cm^3/g$ et mieux de 1,5 à 2,5 $cm^3/g$. Leur surface spécifique est habituellement de 100 à 400 $m^2/g$ et mieux de 200 à 300 $m^2/g$.

La taille des particules de composante catalytique est généralement de 5 à 100 $\mu m$ pour une distribution granulométrique resserrée. Habituellement la largeur de distribution granulométrique

$$\frac{D90}{D10}$$

telle que déjà définie est inférieure à 4 et plus généralement inférieure à 3.

La composante catalytique peut avantageusement être préparée par imprégnation, de façon connue, des particules de $MgCl_2$ précédemment décrites, par un composé de métal de transition liquide ou en solution comportant un ou plusieurs atomes d'halogène et particulièrement du chlore. Préalablement à cette imprégnation ou en même temps il peut être recommandé de procéder au dépôt d'au moins un composé organique choisi parmi les donneurs d'électrons déjà cités..

La composition catalytique obtenue, associée à un cocatalyseur classique, habituellement choisi parmi les composés organoaluminiques tels que les aluminoxanes, les aluminosiloxanes, les composés comportant des liaisons Al-R-Al ou R représente un groupement alcoyle, ou, de formule AlXqR's dans laquelle X représente Cl ou OR' avec R' désignant un radical alcoyle en $C_1$ à $C_{16}$ et de préférence $C_1$ à $C_{12}$ tandis que q et s sont des nombres tels que $1 < s < 3$, $0 < q < 2$ avec $q + s = 3$, forme un catalyseur adapté à la polymérisation des oléfines et plus particulièrement de l'éthylène, du propylène, du butène-1, du 4-méthyle pentène-1 et de l'hexène-1, ou, de leurs mélanges. Au cocatalyseur, il n'est pas exclu d'associer un donneur d'électrons tel que défini précédemment. La composante catalytique et le cocatalyseur sont associés dans des proportions telles que le rapport molaire d'aluminium contenu dans le cocatalyseur au métal de transition de ladite composante se situe entre 0,5 et 1000 et de préférence entre 1 à 400.

La polymérisation des oléfines précitées et en général des oléfines en $C_2$ à $C_{12}$ prises seules ou en mélanges, au moyen du système catalytique défini précédemment peut être mise en oeuvre, en solution ou en suspension dans un milieu liquide inerte et notamment dans un hydrocarbure aliphatique tel que le n-heptane, le n-hexane, l'isohexane, l'isobutane, ou encore en masse dans l'une au moins des oléfines à polymériser maintenue à l'état liquide ou hypercritique.

Les conditions opératoires, notamment températures, pressions, quantité de système catalytique, pour ces polymérisations en phase liquide sont celles qui sont habituellement proposées pour des cas similaires faisant appel à des systèmes catalytiques conventionnels de type Ziegler Natta supporté ou non.

Par exemple pour une polymérisation conduite en suspension ou en solution dans un milieu liquide inerte, on peut opérer à des températures allant jusqu'à 250°C et sous des pressions allant de la pression atmosphérique à 250 bars. Dans le cas d'une polymérisation en milieu propylène liquide, les températures peuvent aller jusqu'à la température critique et les pressions peuvent être comprises entre la pression atmosphérique et la pression critique. Pour une polymérisation ou copolymérisation de l'éthylène en masse conduisant à des polyéthylènes ou à des copolymères majoritaires en éthylène, on peut opérer à des températures comprises entre 130°C et 350°C et sous des pressions allant de 200 à 3500 bars.

Le système catalytique obtenu par association de la composante de métal de transition suivant l'invention avec un cocatalyseur et éventuellement un donneur d'électrons tels que définis plus haut, peut être encore utilisé pour la polymérisation en phase gazeuse des oléfines ou des mélanges d'oléfines, qui viennent d'être cités. En particulier on peut polymériser en phase gazeuse, au contact dudit système catalytique, un mélange d'éthylène ou de propylène et d'une ou plusieurs oléfines en $C_2$ à $C_{12}$ telles que éthylène, propylène, butène-1, hexène-1, méthyl-4 pentène-1 et octène-1, renfermant, lorsqu'il est au contact du système catalytique, une proportion molaire de comonomères en $C_2$ à $C_{12}$ comprise entre 0,1 et 90 %, et de préférence entre 1 et 60 %.

La polymérisation en phase gazeuse de l'oléfine ou des oléfines au contact du système catalytique peut être effectuée dans tout réacteur permettant une polymérisation en phase gazeuse et en particulier dans un réacteur à lit agité et/ou à lit fluidisé. Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou copolymère à synthétiser, et plus particulièrement comprise entre +20°C et (Tf -5)°C, et sous une pression telle que l'oléfine ou les oléfines, et éventuellement les autres monomères hydrocarbonés présents dans le réacteur soient essentiellement en phase vapeur.

La polymérisation en solution, en suspension, en masse, ou en phase gazeuse peut être réalisée en présence d'un agent de transfert de chaînes, de manière à contrôler l'indice de fusion du polymère ou copolymère à produire. L'agent de transfert de chaînes préféré est l'hydrogène, que l'on utilise en quantité pouvant aller jusqu'à 90 %, et se situant de préférence entre 0,1 et 60 % du volume de l'ensemble oléfines et hydrogène amené au réacteur.

La composante de métal de transition suivant l'invention peut également être utilisée pour la préparation d'un prépolymère actif, qui est utilisable seul ou en association avec un cocatalyseur choisi parmi les composés d'aluminium définis précédemment.,

Ledit prépolymère actif est obtenu en mettant en contact une ou plusieurs alpha-oléfines en $C_2$ à $C_{12}$ avec un système catalytique formé en associant la composante de métal de transition suivant l'invention avec un cocatalyseur choisi parmi les composés cités plus haut dans ce but et employés dans les proportions indiquées précédemment, ladite oléfine ou lesdites oléfines en $C_2$ à $C_{12}$ étant utilisées en quantité représentant 2 à 500 grammes et de préférence 2 à 100 grammes de l'oléfine ou des oléfines en $C_2$ à $C_{12}$ par gramme de la composante de métal de transition.

La composante catalytique selon l'invention est particulièrement intéressante dans la polymérisation ou la copolymérisation de l'éthylène ou du propylène ou de leurs mélanges entre eux ou avec une autre oléfine en ce qu'elle permet d'obtenir des polymères ou des copolymères de structures originales dans la mesure bien évidemment où la température de polymérisation est inférieure à la température de fusion du polymère formé.

Le polyéthylène ou les copolymères d'éthylène généralement à plus de 80 % en poids d'éthylène et d'au moins une autre oléfine habituellement de $C_3$ à $C_{12}$ se présentent, au microscope, sous la forme de particules percées en leur centre et constituées d'une succession d'agglomérats fixés les uns aux autres et disposés en couronne. Ces particules habituellement de taille moyenne de 300 à 1000 $\mu$m sont constituées d'agglomérats dont la taille est généralement comprise de 50 à 300 $\mu$m et plus particulièrement de 100 à 200. Le polymère ou copolymère obtenu, de répartition granulométrique étroite et habituellement comprise entre 3 et 4, présente des masses volumiques apparentes, mesurées selon la norme ASTM D1895-méthode A, élevées comprises généralement entre 0,35 et 0,40 g/cm³. La coulabilité des poudres est également élevée avec des valeurs habituellement inférieures ou égales à 20 secondes selon la norme ASTM-D1895.

Le polypropylène ou les copolymères de propylène et d'éthylène ou d'au moins une autre oléfine de $C_4$ à $C_{12}$, généralement à plus de 80 % en poids de propylène, se présentent, au microscope, sous la forme de particules constituées de deux troncs de cône droit réunis par les plus grandes bases, incurvés, vers l'axe de symétrie perpendiculaire aux bases, à l'intersection de l'enveloppe des troncs de cône avec deux plans orthogonaux passant par ledit axe de symétrie. Les deux troncs de cône sont généralement sensiblement identiques et symétriques et tels que le rapport $\frac{D}{h}$ du plus grand diamètre "D" des bases à la hauteur "h" totale des deux troncs de cône réunis est de 1 à 2 et plus particulièrement de 1,4 à 1,7. Le rapport $\frac{D}{d}$ habituellement mesuré du plus grand diamètre "D" de la particule au plus grand diamètre "d" des petites bases des troncs de cône est de 2 à 4 et plus particulièrement de 2,5 à 3,5. Les quatre incurvations sur chacun des deux troncs de cône, séparées une à une à sensiblement 90°, peuvent être définies par rapport au plus grand rayon "R" de la plus grande base des troncs de cône et à la distance "E" séparant le centre de cette plus grande base des troncs de cône du point d'incurvation maximum sur cette même base. Ce rapport $\frac{R}{E}$ est généralement de 1,1 à 1,5 et plus particulièrement de 1,2 à 1,4.

Ces incurvations suivent habituellement les deux troncs de cône de la plus grande base à la plus petite base. Dans ces conditions, le rapport $\frac{r}{e}$ peut être de 1,1 à 1,5 et plus particulièrement de 1,2 à 1,4, "r" étant le plus grand rayon d'une des deux petites bases des troncs de cône et "e" représentant la distance séparant le centre de cette petite base du point d'incurvation maximum sur cette même base. Les figures 1 et 2 en annexe schématisent également une vue de face et une vue de dessus de ce polypropylène et de ses copolymères.

Ces particules de propylène et de copolymère de propylène, dont la taille est généralement comprise de 200 à 500 $\mu$m pour une distribution granulométrie resserrée possèdent une surface spécifique de 0,1 à 3 m²/g. Habituellement la largeur de distribution granulométrie

$$\frac{D90}{D10}$$

est inférieure à 4 et plus généralement inférieure à 3. Les masses volumiques apparentes des polymères de propylène ou des copolymères de propylène sont particulièrement élevées et comprises généralement entre 0,45 et 0,55 g/cm³. La coulabilité des poudres est habituellement de 20 à 25 secondes.

Les particules de polypropylène et ses copolymères quand ils sont obtenus à partir d'une composante et/ou d'un support $MgCl_2$ tels que décrits précédemment sont généralement sensiblement homothétiques des particules de la composante et/ou du support $MgCl_2$.

Les photos annexées illustrent les différents aspects de l'invention.

La photo 1 illustre au grossissement 1600 une particule de $MgCl_2$.

La photo 2 illustre au grossissement 200 un ensemble de particules de $MgCl_2$.

On constate que selon l'invention plus de 80 % des particules du $MgCl_2$ obtenu répondent à la définition qui leur est donnée.

La photo 3 illustre au grossissement 3000 une particule de composante catalytique.

La photo 4 illustre au grossissement 600 un ensemble de particules de composante catalytique.

La photo 5 illustre au grossissement 20 un ensemble de particules de polyéthylène.

La photo 6 illustre au grossissement 60 un ensemble de particules de polypropylène.

La photo 7 illustre au grossissement 20 un ensemble de particules de copolymère éthylène butène-1.

La photo 8 illustre au grossissement 60 un ensemble de particules de copolymère propylène éthylène.

La largeur de distribution granulométrique

$$\frac{D90}{D10}$$

est effectuée au moyen d'un granulomètre à laser MALVERN 1600. La surface spécifique est mesurée par l'adsorption physique isotherme d'azote à la température de l'azote liquide, méthode BET, sur un appareil QUANTASORB. Le volume poreux est déterminé par intrusion de mercure sous pression avec un porosimètre ERBASCIENCE 1500.

Les exemples suivants illustrent l'invention sans toutefois la limiter.

EXEMPLE 1

Dans un réacteur agité, thermostaté à 40°C et purgé à l'azote sec, on introduit 50 ml d'une solution de MgCl$_2$ dans le n-butanol, telle que le rapport BuOH/MgCl$_2$ soit de 10 molaire. On additionne 200 ml d'une huile paraffinique de viscosité de 0,2 Pa.s mesurée à 20°C. L'agitation est portée à une vitesse telle que la vitesse linéaire en bout de pale soit de 120 m/s. On laisse le mélange biphasique sous agitation pendant 5 minutes, puis on ajoute rapidement en une seule fois 125 ml de dioxane 1-4. La précipitation de complexe MgCl$_2$, dioxane 1-4 est immédiate. Après filtration, lavage à l'hexane et séchage sous courant d'azote, on récupère environ 14 g d'une poudre blanche pulvérulente de très bonne coulabilité dont les particules possèdent une morphologie correspondant aux photos 1 et 2. La composition du solide ainsi préparé est de 67 % de dioxane 1-4 et 33 % de MgCl$_2$. Le plus grand diamètre moyen des particules est de 27 $\mu$m et le rapport

$$\frac{D90}{D10}$$

est de 3,6. La surface spécifique mesurée par BET est de 4 m$^2$/g et la porosité de 1,1 cm$^3$/g.

5,8 g de cette composition sont traités par une solution de triéthylaluminium dans le dichloro-1-2-éthane de telle façon que le rapport molaire Al/dioxane 1-4 soit de 2 et la concentration en aluminium de 1 mole par litre. Après filtration, lavage et séchage du solide, on obtient une poudre dont la structure à au moins 80 % correspond à celle des photos 1 et 2. Le diamètre moyen des particules est de 15 $\mu$m. La porosité est de 2,16 cm$^3$/g pour une surface spécifique de 272 m$^2$/g, le rapport moyen $\frac{D}{h}$ = 1,5 et le rapport $\frac{D}{d}$ = 2,5 avec $\frac{R}{E}$ = 1,2 et $\frac{r}{e}$ = 1,2
Le rapport

$$\frac{D90}{D10} = 3,5 \ .$$

Le MgCl$_2$ contient 24,5 % Mg.

Cette poudre est reprise par 50 ml d'une solution de dioctyle phtalate dans le dichloro-1-2-éthane à 0,2 molaire pendant 2 heures à 80°C. Après filtration on additionne au MgCl$_2$, 50 ml de TiCl$_4$ pur. Après 2 heures sous agitation à 80°C, on procède à une nouvelle filtration et on reprend le solide par 50 ml d'une solution de dichloro 1-2 éthane contenant 1 mole de TiCl$_4$ pendant 30 minutes à 80°C sous agitation. Après filtration ce traitement par le TiCl$_4$ dilué est renouvelé une nouvelle fois. On obtient après filtration, lavage à l'hexane et séchage, 1,9 g de composante catalytique contenant respectivement 69 ; 23,8 et 0,9 % en poids de chlore, de magnésium et de titane. La structure des particules de la composante obtenue correspond à celle des photos 3 et 4. Le diamètre moyen des particules est de 15 $\mu$m et la largeur de la distribution granulométrique de 3,4. Les particules possèdent en moyenne les caractéristiques suivantes: $\frac{D}{h}$ = 1,5, $\frac{D}{d}$ = 2,5, $\frac{R}{E}$ = 1,2, $\frac{r}{e}$ = 1,2. Leur porosité moyenne est de 2,2 cm$^3$/g pour une surface spécifique de 290 m$^2$/g.

Dans un réacteur en acier inoxydable on introduit 1,2 l d'hydrogène, 600 g de propylène liquide, 1,3 g de triéthylaluminium et 0,1 équivalent molaire par rapport à l'aluminium de cyclohexylméthyldiméthoxysilane. On ajoute 20 mg de la composante catalytique précédente. Le réacteur est maintenu sous agitation pendant 1 heure à 70°C.

On récupère 172 g de polypropylène de très bonne coulabilité dont la structure des particules correspond à celle de la photo 6. Le diamètre moyen des particules de polymère est de 270 $\mu$m et la largeur de distribution granulométrique de 2,6. Le taux de fines particules inférieures à 100 $\mu$m est de 0,2 %. La masse volumique apparente est de 0,46 g/cm$^3$ et la coulabilité est de 21 secondes. Le taux de polymère insoluble dans l'heptane bouillant est de 95,1 %. L'indice de fusion mesuré selon la norme ASTM D1238 méthode L est de 4.

EXEMPLE 2

On prépare dans les conditions de l'exemple 1 une poudre de MgCl$_2$ à l'exception que l'opération est effectuée à 65°C au lieu de 40°C. On obtient finalement 14 g de poudre que l'on traite par une solution de triéthylaluminium dans le dichloro-1-2-éthane dans les mêmes conditions que celles l'exemple 1. La structure finale des particules correspond à celle des photos 1 et 2. Le diamètre moyen des particules est de 35 $\mu$m et la largeur de la distribution granulométrique de 3,8. Porosité 1,7 cm$^3$/g, surface spécifique 229 m$^2$/g, $\frac{D}{h}$ = 1,6 $\frac{D}{d}$ = 3, $\frac{B}{E}$ = 1,3, $\frac{r}{e}$ = 1,3 , Mg 24,3 %

La poudre obtenue est mise en suspension dans 50 ml de TiCl$_4$ pur pendant 3 heures à 80°C. Après filtration, lavage avec de l'hexane et séchage, la composante catalytique obtenue contient respectivement 23,5 ; 1,4 et 71,3 % en poids de magnésium, de titane et de chlore. La structure des particules de la composante obtenue correspond à celle des photos 3 et 4. Le diamètre moyen des particules est de 30 $\mu$m et la largeur de la distribution granulométrique de 3,3. Les particules possèdent en moyenne les caractéristiques suivantes :

$\frac{D}{h}$ = 1,6, $\frac{D}{d}$ = 3, $\frac{B}{E}$ = 1,3, $\frac{r}{e}$ = 1,3.

Leur porosité moyenne est de 1,53 cm$^3$/g pour une surface spécifique de 207 m$^2$/g.

Dans un réacteur en acier inoxydable, on introduit sous azote 2 litres d'hexane, 10 mM de triisobutylaluminium et 10 mg de la composante catalytique précédente. La température est portée à 86°C. Le milieu réactionnel est mis sous pression de 0,4 MPa d'hydrogène. le réacteur est alimenté avec un mélange d'éthylène et de butène-1 à 1 % de butène-1. La pression en monomères est de 0,6 MPa. Après trois heures de réaction on récupère 173 g de copolymère éthylène-butène de très bonne coulabilité dont la structure des particules correspond à celle de la photo 7. Le diamètre moyen des particules de polymère est de 500 $\mu$m et la largeur de distribution granulométrique de 3,8. La masse volumique apparente est de 0,35 g/cm$^2$, la coulabilité est de 19 secondes. Les indices de fusion mesurés selon la norme ASTM D1238 méthodes E et F sont respectivement de 1 et 34.

EXEMPLE 3

Toutes les autres conditions correspondant à celles de l'exemple 1, on met en oeuvre 240 ml de solution butanolique de MgCl$_2$ et 1150 ml d'huile paraffinique. La vitesse linéaire d'agitation en bout de pale est de 280 m/s et la température de l'opération est de 90°C. On additionne 700 ml de dioxane-1-4. On obtient 66 g de poudre dont la structure des particules correspond à celle des photos 1 et 2. Le diamètre moyen des particules est de 15 $\mu$m et la largeur de la distribution granulométrique de 3,5. Porosité 2,1 cm$^3$/g, surface spécifique 217 m$^2$/g. $\frac{D}{h}$ = 1,5, $\frac{D}{d}$ = 3, $\frac{B}{E}$ = 1,2, $\frac{r}{e}$ = 1,2,

EXEMPLE 4

On reprend la composante catalytique telle que décrite dans l'exemple 2.

L'homopolymérisation de l'éthylène est conduite dans les mêmes conditions que celles de l'exemple 2, sauf en ce qui concerne les pressions partielles d'hydrogène et d'éthylène qui sont respectivement de 0,47 MPa et de 0,63 MPa. On récupère, après 2 heures de réaction, 53 g de polyéthylène. La structure des particules correspond à celle de la photo 5.

Le diamètre moyen est de 640 microns. La largeur de distribution de 3,4. La masse volumique apparente est de 0,37 g/cm$^3$, la coulabilité de 20 secondes.

Les indices de fusion mesurés selon la norme ASTM D1238 méthodes E et F sont respectivement de 3,5 et 108.

EXEMPLE 5

La composante catalytique décrite dans l'exemple 1, est engagée en copolymérisation du propylène et de l'éthylène. Dans un réacteur en acier inoxydable purgé par de l'azote, on introduit dans l'ordre : 1,2 litre d'hydrogène, 600 g de propylène liquide, 1,3 g de triéthylaluminium et 0,1 équivalent par rapport à l'aluminium de cyclohexyle méthyle diméthoxysilane. On ajoute alors 20 mg de la composante catalytique et la température est montée à 70°C.

Dès que la température réactionnelle atteint 70°C on introduit dans le réacteur pendant 1 heure, un débit d'éthylène de 10 Nl/min.

On récupère, après dégazage du réacteur, 160 g de copolymère propylène-éthylène.

La structure des particules est celle correspondant à la photo 8. Le diamètre moyen est de 330 $\mu$m et la largeur de la distribution est de 3,6. Le taux de fines particules inférieures à 100 $\mu$m est de 1 %.

La masse volumique apparente est de 0,43 g/cm$^3$ et la coulabilité de 25 secondes.

L'indice de fusion du copolymère mesuré selon la norme ASTM D1238 méthode L est de 2,5. Le taux de copolymère insoluble dans l'heptane bouillant est de 82 %. L'analyse par infra-rouge du taux d'éthylène dans le copolymère conduit à une valeur de 3,5 % en poids.

**Revendications**

1. Particules poreuses de MgCl$_2$ se présentant, au microscope, sous la forme de sensiblement deux troncs de cône droit réunis par les plus grandes bases, incurvés, vers l'axe de symétrie perpendiculaire aux bases, à l'intersection de l'enveloppe des troncs de cône avec deux plans orthogonaux passant par ledit axe de symétrie.

2. Particules de MgCl$_2$ selon la revendication 1 caractérisées en ce que les deux troncs de cône sont sensiblement identiques et symétriques.

3. Particules de MgCl$_2$ selon l'une des revendications 1 ou 2 caractérisées en ce que le rapport $\frac{D}{h}$ du plus grand diamètre "D" des bases à la hauteur "h" totale des deux troncs de cône réunis est de 1 à 2.

4. Particules de MgCl$_2$ selon l'une des revendications 1 à 3 caractérisées en ce que le rapport $\frac{D}{d}$ du plus grand diamètre "D" de la particule au plus grand diamètre "d" des petites bases des troncs de cône est de 2 à 4.

5. Particules de MgCl$_2$ selon l'une des revendications 1 à 4 caractérisées en ce que le rapport $\frac{R}{E}$ du plus grand rayon "R" de la plus grande base des troncs de cône à la distance "E" séparant le centre de cette plus grande base du point d'incurvation maximum sur cette même base est de 1,1 à 1,5.

6. Particules de MgCl$_2$ selon l'une des revendications 1 à 5 caractérisées en ce que le rapport $\frac{r}{e}$ du plus grand rayon "r" d'une des deux petites bases des troncs de cône à la distance "e" séparant le centre de cette petite base du point d'incurvation maximum sur cette même base est de 1,1 à 1,5.

7. Particules de MgCl$_2$ selon l'une des revendications 1 à 6 caractérisées en ce que leur porosité est de 1,5 à 2,5 cm$^3$/g.

8. Particules de MgCl$_2$ selon l'une des revendications 1 à 7 caractérisées en ce que leur surface spécifique est de 100 à 400 m$^2$/g.

9. Particules de MgCl$_2$ selon l'une des revendications 1 à 8 caractérisées en ce que la taille des particules est de 10 à 100 $\mu$m avec une largeur de distribution granulométrique

$$\frac{\underline{D90}}{\underline{D10}}$$

inférieure à 4.

10. Particules de MgCl$_2$ selon l'une des revendications 1 à 9 caractérisées en ce qu'elles présentent aux rayons X, outre le pic de diffraction situé à environ 0,181-0,184 nm caractéristique du MgCl$_2$, trois pic situés à environ 0,75-0,85 nm, 0,70-0,75 nm et 0,50-0,52 nm.

11. Procédé de fabrication des particules de MgCl$_2$ des revendications 1 à 10 consistant à dissoudre du MgCl$_2$ dans un alcool et caractérisé en ce que, après mise en émulsion de la solution alcoolique dans un liquide dispersant non solvant et inerte vis à vis de la solution, un complexe MgCl$_2$-dioxane 1-4 est précipité par ajout dans l'emulsion de dioxane 1-4, le dioxane 1-4 étant ensuite éliminé dudit complexe.

12. Procédé selon la revendication 11 caractérisé en ce que l'alcool est choisi parmi les monoalcools contenant de 1 à 20 atomes de carbone.

13. Procédé selon l'une des revendications 11 ou 12 caractérisé en ce que le liquide dispersant est choisi parmi les hydrocarbures possédant au moins 8 atomes de carbone.

14. Procédé selon l'une des revendications 11 à 13 caractérisé en ce que le liquide dispersant est une huile paraffinique de viscosité de 0,1 à 1 Pa.s à 20°C.

15. Procédé selon l'une des revendications 11 à 14 caractérisé en ce que le rapport volumique du liquide dispersant à la solution alcoolique est de 1 à 5.

16. Procédé selon l'une des revendications 11 à 15 caractérisé en ce que sont utilisés, pour la précipitation, au moins 2 volumes de dioxane 1-4 pour 1 volume de solution alcoolique.

17. Procédé selon l'une des revendications 11 à 16 caractérisé en ce qu'on élimine le dioxane 1-4 par chauffage sous vide.

18. Procédé selon l'une des revendications 11 à 16 caractérisé en ce que le complexe MgCl$_2$-dioxane 1-4 est traité par un composé d'aluminium choisi parmi les aluminoxanes non halogénés, les aluminosiloxanes non halogénés, ou encore parmi les alkylaluminium AlR$_3$ ou R$_3$ représente un radical alcoyle contenant de 1 à 20 atomes de carbone.

19. Procédé selon la revendication 18 caractérisé en ce que le rapport molaire Al/dioxane 1-4 est supérieur ou égal à 2.

20. Composante catalytique constituée de particules de MgCl$_2$ imprégnées d'un composé de métal de transition et plus particulièrement d'un composé halogéné de titane, et, éventuellement d'un donneur d'électrons caractérisée en ce que ses particules se présentent, au microscope, sous la forme de sensiblement deux troncs de cône droit réunis par les plus grandes bases, incurvés, vers l'axe de symétrie perpendiculaire aux bases, à l'intersection de l'enveloppe des troncs de cône avec deux plans orthogonaux passant par ledit axe de symétrie.

21. Composante catalytique selon la revendication 20 caractérisée en ce que les deux troncs de cône de chaque particule sont sensiblement identiques et symétriques.

22. Composante catalytique selon l'une des revendications 20 ou 21 caractérisée en ce que dans les particules le rapport $\frac{D}{h}$ du plus grand diamètre "D" des bases à la hauteur "h" totale des deux troncs de cône réunis est de 1 à 2.

23. Composante catalytique selon l'une des revendications 20 à 22 caractérisée en ce que dans les particules le rapport $\frac{D}{d}$ du plus grand diamètre "D" de la particule de composante au plus grand diamètre "d" des petites bases des troncs de cône est de 2 à 4.

24. Composante catalytique selon l'une des revendications 20 à 23 caractérisée en ce que dans les particules le rapport $\frac{R}{E}$ du plus grand rayon "R" de la plus grande base des troncs de cône à la distance "E" séparant le centre de cette plus grande base du point d'incurvation maximum sur cette même base est de 1,1 à 1,5

25. Composante catalytique selon l'une des revendications 20 à 24 caractérisée en ce que dans les particules le rapport $\frac{r}{e}$ du plus rayon d'une des deux petites bases des troncs de cône à la distance "e" séparant le centre de cette petite base du point d'incurvation maximum sur cette même base est de 1,1 à 1,5.

26. Composante catalytique selon l'une des revendications 20 à 25 caractérisée en ce que la porosité de ses particules est de 1 à 3 cm3/g.

27. Composante catalytique selon l'une des revendications 20 à 26 caractérisée en ce que sa surface spécifique est de 100 à 400 m2/g.

28. Composante catalytique selon l'une des revendications 20 à 27 caractérisée en ce que la taille de ses particules est de 5 à 100 $\mu$m avec une largeur de distribution granulométrique

$$\underline{D90}$$
$$D10$$

inférieure à 4.

29. Polyoléfine obtenue par polymérisation d'une ou plusieurs oléfines en $C_2$ à $C_{12}$ à une température inférieure à la température de fusion du polymère formé, en présence d'un système catalytique constitué d'une composante catalytique contenant du $MgCl_2$ et un composé de métal de transition, et, d'un cocatalyseur à base d'un composé organique d'aluminium caractérisé en ce que la composante catalytique est choisie parmi les composantes catalytiques d'une des revendications 20 à 28 ou obtenue à partir de $MgCl_2$ d'une des revendications 1 à 10.

30. Polyéthylène ou copolymère d'éthylène et d'au moins une autre oléfine de $C_3$ à $C_{12}$ selon la revendication 29 se présentant, au microscope, sous la forme de particules percées en leur centre et constituées d'une succession d'agglomérats fixés les uns aux autres et disposés en couronne.

31. Polyéthylène selon la revendication 30 caractérisé en ce que la taille moyenne des particules est de 300 à 1000 $\mu$m et celle des agglomérats de 50 à 300 $\mu$m.

32. Polypropylène ou copolymère de propylène a plus de 80 % en poids de propylène et d'éthylène ou d'une autre oléfine de $C_4$ à $C_{12}$ selon la revendication 29 se présentant, au microscope, sous la forme de particules constituées de deux troncs de cône droit réunis par les plus grandes bases, incurvés, vers l'axe de symétrie perpendiculaire aux bases, à l'intersection de l'enveloppe des troncs de cône avec deux plans orthogonaux passant par ledit axe de symétrie.

33. Polypropylène ou copolymère de propylène selon la revendication 32 caractérisé en ce que les deux troncs de cône de chaque particule sont sensiblement identiques et symétriques.

34. Polypropylène ou copolymère de propylène selon l'une des revendications 32 ou 33 caractérisé en ce que dans les particules le rapport $\frac{D}{h}$ du plus grand diamètre "D" des bases à la hauteur "h" totale des deux troncs de cône réunis de 1 à 2.

35. Polypropylène ou copolymère de propylène selon l'une des revendications 32 à 34 caractérisé en ce que dans les particules le rapport $\frac{D}{d}$ du plus grand diamètre "D" de la particule au plus grand diamètre "d" des petites bases des troncs de cône est de 2 à 4.

36. Polypropylène ou copolymère de propylène selon l'une des revendications 32 à 35 caractérisé en ce que dans les particules le rapport $\frac{R}{E}$ du plus grand rayon "R" de la plus grande base des troncs de cône à la distance "E" séparant le centre de cette plus grande base du point d'incurvation maximum sur cette même base est de 1,1 à 1,5.

37. Polypropylène ou copolymère de propylène selon l'une des revendications 32 à 36 caractérisé en ce que dans les particules le rapport $\frac{r}{e}$ du plus grand rayon d'une des deux petites bases des troncs de cône à la distance "e" séparant le centre de cette petite base du point d'incurvation maximum sur cette même base est de 1,1 à 1,5.

38. Polypropylène ou copolymère de propylène selon l'une des revendications 32 à 37 caractérisé en ce que sa surface spécifique est de 0,1 à 3 m²/g.

39. Polypropylène ou copolymère de propylène selon l'une des revendications 32 à 38 caractérisé en ce que la taille des particules est de 200 à 500 $\mu$m avec une largeur de distribution granulométrique

$$\frac{D90}{D10}$$

inférieure à 4.

40. Polypropylène ou copolymère de propylène selon l'une des revendications 32 à 39 caractérisé en ce que les particules sont sensiblement homothétiques des particules de MgCl$_2$ des revendications 1 à 10 ou des particules des composantes des revendications 20 à 28.

**Claims**

1. Porous particles of MgCl$_2$ which are, in the microscope, in the form of substantially two frustums of a right cone which are joined via the largest bases, which are curved, towards the axis of symmetry perpendicular to the bases, at the intersection of the envelope of the cone frustums with two orthogonal planes passing through the said axis of symmetry.

2. Particles of MgCl$_2$ according to Claim 1, characterized in that the two cone frustums are substantially identical and symmetrical.

3. Particles of MgCl$_2$ according to either of Claims 1 and 2, characterized in that the ratio D/h of the largest diameter "D" of the bases to the total height "h" of the two joined cone frustums is from 1 to 2.

4. Particles of MgCl$_2$ according to one of Claims 1 to 3, characterized in that the ratio D/d of the largest diameter "D" of the particle to the largest diameter "d" of the small bases of the cone frustums is from 2 to 4.

5. Particles of MgCl$_2$ according to one of Claims 1 to 4, characterized in that the ratio R/E of the largest radius "R" of the largest base of the cone frustums to the distance "E" separating the centre of this largest base from the point of maximum curvature on this same base is from 1.1 to 1.5.

6. Particles of MgCl$_2$ according to one of Claims 1 to 5, characterized in that the ratio r/e of the largest radius "r" of one of the two small bases of the cone frustums to the distance "e" separating the centre of this small base from the point of maximum curvature on this same base is from 1.1 to 1.5.

7. Particles of MgCl$_2$ according to one of Claims 1 to 6, characterized in that their porosity is from 1.5 to 2.5 cm³/g.

8. Particles of MgCl$_2$ according to one of Claims 1 to 7, characterized in that their specific surface is from 100 to 400 m²/g.

9. Particles of MgCl$_2$ according to one of Claims 1 to 8, characterized in that the particle size is from 10 to 100 $\mu$m with a particle size distribution width D90/D10 smaller than 4.

10. Particles of MgCl$_2$ according to one of Claims 1 to 9, characterized in that, in X-rays, they exhibit, besides the diffraction peak situated at approximately 0.181-0.184 nm, characteristic of MgCl$_2$, three peaks situated at approximately 0.75-0.85 nm, 0.70-0.75 nm and 0.50-0.52 nm.

11. Process for the manufacture of the particles of MgCl$_2$ of Claims 1 to 10, consisting in dissolving MgCl$_2$ in an alcohol and characterized in that, after emulsification of the alcoholic solution in a nonsolvent dispersant liquid which is inert towards the solution, an MgCl$_2$-1,4-dioxane complex is precipitated by addition of 1,4-dioxane to the emulsion, the 1,4-dioxane being subsequently removed from the said complex.

**12.** Process according to Claim 11, characterized in that the alcohol is chosen from monoalcohols containing from 1 to 20 carbon atoms.

**13.** Process according to either of Claims 11 and 12, characterized in that the dispersant liquid is chosen from hydrocarbons containing at least 8 carbon atoms.

**14.** Process according to one of Claims 11 to 13, characterized in that the dispersant liquid is a paraffinic oil with a viscosity of 0.1 to 1 Pa s at 20°C.

**15.** Process according to one of Claims 11 to 14, characterized in that the volume ratio of the dispersant liquid to the alcoholic solution is from 1 to 5.

**16.** Process according to one of Claims 11 to 15, characterized in that at least 2 volumes of 1,4-dioxane per 1 volume of alcoholic solution are employed for the precipitation.

**17.** Process according to one of Claims 11 to 16, characterized in that the 1,4-dioxane is removed by heating under vacuum.

**18.** Process according to one of Claims 11 to 16, characterized in that the $MgCl_2$-1,4-dioxane complex is treated with an aluminium compound chosen from nonhalogenated aluminoxanes, nonhalogenated aluminosiloxanes or else from alkylaluminiums $AlR_3$ where $R_3$ denotes an alkyl radical containing from 1 to 20 carbon atoms.

**19.** Process according to Claim 18, characterized in that the molar ratio Al/1,4-dioxane is higher than or equal to 2.

**20.** Catalytic component consisting of particles of $MgCl_2$ impregnated with a transition metal compound and more particularly with a titanium halogen compound and, optionally, with an electron-donor, characterized in that its particles are, in the microscope, in the form of substantially two frustums of a right cone joined via the largest bases, which are curved, towards the axis of symmetry perpendicular to the bases, at the intersection of the envelope of the cone frustums with two orthogonal planes passing through the said axis of symmetry.

**21.** Catalytic component according to Claim 20, characterized in that the two cone frustums of each particle are substantially identical and symmetrical.

**22.** Catalytic component according to either of Claims 20 and 21, characterized in that, in the particles, the ratio D/h of the largest diameter "D" of the bases to the total height "h" of the two joined cone frustums is from 1 to 2.

**23.** Catalytic component according to one of Claims 20 to 22, characterized in that, in the particles, the ratio D/d of the largest diameter "D" of the particle of component to the largest diameter "d" of the small bases of the cone frustums is from 2 to 4.

**24.** Catalytic component according to one of Claims 20 to 23, characterized in that, in the particles, the ratio R/E of the largest radius "R" of the largest base of the cone frustums to the distance "E" separating the centre of this largest base from the point of maximum curvature on this same base is from 1.1 to 1.5.

**25.** Catalytic component according to one of Claims 20 to 24, characterized in that, in the particles, the ratio r/e of the largest radius of one of the two small bases of the cone frustums to the distance "e" separating the centre of this small base from the point of maximum curvature on this same base is from 1.1 to 1.5.

**26.** Catalytic component according to one of Claims 20 to 25, characterized in that the porosity of its particles is from 1 to 3 $cm^3/g$.

**27.** Catalytic component according to one of Claims 20 to 26, characterized in that its specific surface is from 100 to 400 $m^2/g$.

**28.** Catalytic component according to one of Claims 20 to 27, characterized in that its particle size is from 5 to 100 $\mu$m with a particle size distribution width D90/D10 smaller than 4.

**29.** Polyolefin obtained by polymerization of one or more $C_2$-$C_{12}$ olefins at a temperature below the melting temperature of the polymer formed, in the presence of a catalyst system consisting of a catalytic component containing $MgCl_2$ and a transition metal compound and of a cocatalyst based on an organoaluminium compound, characterized in that the catalytic component is chosen from the catalytic components of one of Claims 20 to 28 or obtained from $MgCl_2$ of one of Claims 1 to 10.

**30.** Polyethylene or copolymer of ethylene and of at least one other $C_3$-$C_{12}$ olefin according to Claim 29, which is, in the microscope, in the form of particles pierced in their centre and consisting of a succession of agglomerates attached to one another and arranged in a ring.

**31.** Polyethylene according to Claim 30, characterized in that the mean size of the particles is from 300 to 1000 $\mu$m and that of the agglomerates from 50 to 300 $\mu$m.

**32.** Polypropylene or copolymer of propylene containing more than 80 % by weight of propylene and of ethylene or of another $C_4$-$C_{12}$ olefin, according to Claim 29, which is, in the microscope, in the form of particles consisting of two frustums of a right cone which are joined via the largest bases, which are curved, towards the axis of symmetry perpendicular to the bases, at the intersection of the envelope of the cone frustums with two orthogonal planes passing through the said axis of symmetry.

**33.** Polypropylene or propylene copolymer according to Claim 32, characterized in that the two cone frustums of each particle are substantially identical and symmetrical.

**34.** Polypropylene or propylene copolymer according to either of Claims 32 and 33, characterized in that, in the particles, the ratio D/h of the largest diameter "D" of the bases to the total height "h" of the two joined cone frustums is from 1 to 2.

**35.** Polypropylene or propylene copolymer according to one of Claims 32 to 34, characterized in that, in the particles, the ratio D/d of the largest diameter "D" of the particle to the largest diameter "d" of the small bases of the cone frustums is from 2 to 4.

**36.** Polypropylene or propylene copolymer according to one of Claims 32 to 35, characterized in that, in the particles, the ratio R/E of the largest radius "R" of the largest base of the cone frustums to the distance "E" separating the centre of this largest base from the point of maximum curvature on this same base is from 1.1 to 1.5.

**37.** Polypropylene or propylene copolymer according to one of Claims 32 to 36, characterized in that, in the particles, the ratio r/e of the largest radius of one of the two small bases of the cone frustums to the distance "e" separating the centre of this small base from the point of maximum curvature on this same base is from 1.1 to 1.5.

**38.** Polypropylene or propylene copolymer according to one of Claims 32 to 37, characterized in that its specific surface is from 0.1 to 3 $m^2$/g.

**39.** Polypropylene or propylene copolymer according to one of Claims 32 to 38, characterized in that the particle size is from 200 to 500 $\mu$m with a particle size distribution width D90/D10 smaller than 4.

**40.** Polypropylene or propylene copolymer according to one of Claims 32 to 39, characterized in that the particles are substantially homothetic with regard to the particles of $MgCl_2$ of Claims 1 to 10 or to the particles of the components of Claims 20 to 28.

**Patentansprüche**

**1.** Poröse Teilchen aus $MgCl_2$, die sich unter dem Mikroskop in etwa als zwei aufrechte Kegelstümpfe darstellen, die sich an den größeren Grundflächen vereinigen und in Richtung der zu den Grundflächen senkrechten Symmetrieachse am Schnittpunkt der Umfangsfläche der Kegelstümpfe mit zwei durch diese Symmetrieachse verlaufenden orthogonalen Ebenen gekrümmt sind.

**2.** $MgCl_2$-Teilchen nach Anspruch 1, dadurch gekennzeichnet, daß die zwei Kegelstümpfe annähernd identisch und symetrisch sind.

**3.** $MgCl_2$-Teilchen nach Anspruch 1 oder 2, dadurch gekennzeichnet, daß die Beziehung D/h von größerem Durchmesser "D" der Grundflächen zur Gesamthöhe "h" der zwei vereinigten Kegelstümpfe zwischen 1 und 2 liegt.

**4.** $MgCl_2$-Teilchen nach einem der Ansprüche 1 bis 3, dadurch gekennzeichnet, daß die Beziehung D/d von größerem Durchmesser "D" des Teilchens zum größeren Durchmesser "d" der kleineren Grundflächen der Kegelstümpfe zwischen 2 und 4 liegt.

**5.** $MgCl_2$-Teilchen nach einem der Ansprüche 1 bis 4, dadurch gekennzeichnet, daß die Beziehung R/E von größerem Radius "R" der größeren Grundfläche der Kegelstümpfe zum Abstand "E" zwischen dem Mittelpunkt dieser größeren Grundfläche und dem maximalen Krümmungspunkt dieser gleichen Grundfläche zwischen 1,1 und 1,5 liegt.

6. MgCl$_2$-Teilchen nach einem der Ansprüche 1 bis 5, dadurch gekennzeichnet, daß die Beziehung r/e von größerem Durchmesser "r" einer der beiden kleineren Grundflächen der Kegelstümpfe zum Abstand "e" zwischen dem Mittelpunkt dieser kleineren Grundfläche und dem maximalen Krümmungspunkt dieser gleichen Grundfläche zwischen 1,1 und 1,5 liegt.

7. MgCl$_2$-Teilchen nach einem der Ansprüche 1 bis 6, dadurch gekennzeichnet, daß deren Porosität zwischen 1,5 und 2,5 cm$^3$/g liegt.

8. MgCl$_2$-Teilchen nach einem der Ansprüche 1 bis 7, dadurch gekennzeichnet, daß deren spezifische Oberfläche zwischen 100 und 400 m$^2$/g liegt.

9. MgCl$_2$-Teilchen nach einem der Ansprüche 1 bis 8, dadurch gekennzeichnet, daß die Teilchengröße zwischen 10 und 100 $\mu$m liegt, wobei die Teilchengrößenverteilung D90/D10 kleiner als 4 ist.

10. MgCl$_2$-Teilchen nach einem der Ansprüche 1 bis 9, dadurch gekennzeichnet, daß im Röntgenstrahlenbeugungsdiagramm außer dem Beugungspeak bei etwa 0,181 bis 0,184 nm, der für MgCl$_2$ charakteristisch ist, drei Peaks auftreten, die bei etwa 0,75 bis 0,85 nm, 0,70 bis 0,75 nm und bei 0,50 bis 0,52 nm auftreten.

11. Verfahren zur Herstellung von MgCl$_2$-Teilchen nach einem der Ansprüche 1 bis 10, bestehend aus der Lösung von MgCl$_2$ in einem Alkohol und dadurch gekennzeichnet, daß nach Emulgierung der alkoholischen Lösung in einer in der Lösung nicht löslichen und gegenüber dieser inerten Dispersionsflüssigkeit ein MgCl$_2$/1,4-Dioxan-Komplex durch Zugabe von 1,4-Dioxan in die Emulsion ausgefällt wird, wobei das 1,4-Dioxan anschließend von dem Komplex abgetrennt wird.

12. Verfahren nach Anspruch 11, dadurch gekennzeichnet, daß der Alkohol ausgewählt wird aus Monoalkoholen mit 1 bis 20 Kohlenstoffatomen.

13. Verfahren nach Anspruch 11 oder 12, dadurch gekennzeichnet, daß die Dispersionsflüssigkeit ausgewählt wird aus Kohlenwasserstoffen mit wenigstens 8 Kohlenstoffatomen.

14. Verfahren nach einem der Ansprüche 11 bis 13, dadurch gekennzeichnet, daß die Dispersionsflüssigkeit ein Paraffinöl mit einer Viskosität von 0,1 bis 1 Pa • s bei 20 °C ist.

15. Verfahren nach einem der Ansprüche 11 bis 14, dadurch gekennzeichnet, daß das Volumenverhältnis von Dispersionsflüssigkeit zur alkoholischen Lösung 1 bis 5 beträgt.

16. Verfahren nach einem der Ansprüche 11 bis 15, dadurch gekennzeichnet, daß es zur Fällung wenigstens zwei Volumenteile an 1,4-Dioxan pro 1 Volumenteil der alkoholischen Lösung verwendet werden.

17. Verfahren nach einem der Ansprüche 11 bis 16, dadurch gekennzeichnet, daß man das 1,4-Dioxan durch Erhitzen im Vakuum entfernt.

18. Verfahren nach einem der Ansprüche 11 bis 16, dadurch gekennzeichnet, daß der MgCl$_2$/1,4-Dioxan-Komplex mit einer Aluminiumverbindung, ausgewählt aus nicht halogenierten Aluminoxanen, nicht halogenierten Aluminosiloxanen oder aus Alkylaluminiumverbindungen AlR$_3$, wobei R$_3$ einen Alkylrest mit 1 bis 20 Kohlenstoffatomen darstellt, behandelt wird.

19. Verfahren nach Anspruch 18, dadurch gekennzeichnet, daß das Molverhältnis von Al zu 1,4-Dioxan Kleiner oder gleich 2 ist.

20. Katalytischer Bestandteil, bestehend aus MgCl$_2$-Teilchen, welche mit einer Übergangsmetallverbindung und insbesondere mit einer halogenierten Titanverbindung und gegebenenfalls einem Elektronendonor imprägniert sind, dadurch gekennzeichnet, daß diese Teilchen sich unter dem Mikroskop annähernd als zwei aufrechte Kegelstümpfe darstellen, die sich an den größeren Grundflächen vereinigen und in Richtung der zu den Grundflächen senkrechten Symmetrieachse am Schnittpunkt der Umfangsfläche der Kegelstümpfe mit zwei durch diese Symmetrieachse verlaufenden orthogonalen Ebenen gekrümmt sind.

21. Katalytischer Bestandteil nach Anspruch 20, dadurch gekennzeichnet, daß die Kegelstümpfe jedes Teilchens annähernd identisch und symetrisch sind.

22. Katalytischer Bestandteil nach Anspruch 20 oder 21, dadurch gekennzeichnet, daß die Teilchen eine Beziehung D/h von größerem Durchmesser "D" der Grundflächen zur Gesamthöhe "h" der zwei vereinigten Kegelstümpfe von 1 bis 2 besitzen.

23. Katalytischer Bestandteil nach einem der Ansprüche 20 bis 22, dadurch gekennzeichnet, daß die Teilchen eine Beziehung D/d von größerem Durchmesser "D" des Teilchens des Bestandteils zu größerem Durchmesser "d" der kleineren Grundflächen der Kegelstümpfe von 2 bis 4 besitzen.

24. Katalytischer Bestandteil nach einem der Ansprüche 20 bis 23, dadurch gekennzeichnet, daß die Teilchen eine Beziehung R/E von größerem Radius "R" der größeren Grundfläche der Kegelstümpfe zum Abstand "E" zwischen dem Mittelpunkt dieser größeren Grundfläche und dem maximalen Krümmungspunkt dieser gleichen Grundfläche von 1,1 bis 1,5 besitzen.

25. Katalytischer Bestandteil nach einem der Ansprüche 20 bis 24, dadurch gekennzeichnet, daß die Teilchen eine Beziehung r/e von größerem Radius "r" einer der beiden kleineren Grundflächen der Kegelstümpfe zum Abstand "e" zwischen dem Mittelpunkt dieser kleineren Grundfläche und dem maximalen Krümmungspunkt dieser gleichen Grundfläche von 1,1 bis 1,5 besitzen.

26. Katalytischer Bestandteil nach einem der Ansprüche 20 bis 25, dadurch gekennzeichnet, daß die Porosität seiner Teilchen zwischen 1 und 3 $cm^3/g$ liegt.

27. Katalytischer Bestandteil nach einem der Ansprüche 20 bis 26, dadurch gekennzeichnet, daß seine spezifische Oberfläche zwischen 100 und 400 $m^2/g$ liegt.

28. Katalytischer Bestandteil nach einem der Ansprüche 20 bis 27, dadurch gekennzeichnet, daß die Teilchengröße zwischen 5 und 100 $\mu$m liegt, wobei die Teilchengrößenverteilung D90/D10 kleiner als 4 ist.

29. Polyolefin, erhalten durch Polymerisation eines oder mehrerer $C_2$- bis $C_{12}$-Olefine bei einer Temperatur unter der Schmelztemperatur des gebildeten Polymers in Gegenwart eines katalytischen Systems aus einem katalytischen Bestandteil, enthaltend $MgCl_2$ und eine Übergangsmetallverbindung und einen Cokatalysator auf Basis einer organischen Aluminiumverbindung, dadurch gekennzeichnet, daß der katalytische Bestandteil ausgewählt wird aus den katalytischen Bestandteilen nach einem der Ansprüche 20 bis 28 oder gewonnen wird aus $MgCl_2$ nach einem der Ansprüche 1 bis 10.

30. Polyethylen oder Copolymer aus Ethylen und wenigstens einem weiteren $C_3$- bis $C_{12}$-Olefin nach Anspruch 29, dadurch gekennzeichnet, daß es sich unter dem Mikroskop in Form von in ihrem Zentrum mit einem Loch versehenen Teilchen darstellt, welche aus einer Folge von miteinander verbundenen Agglomeraten bestehen und kranzförmig angeordnet sind.

31. Polyethylen nach Anspruch 30, dadurch gekennzeichnet, daß die mittlere Teilchengröße zwischen 300 und 1000 $\mu$m und die der Agglomerate zwischen 50 und 300 $\mu$m liegt.

32. Polypropylen oder Copolymer aus Propylen mit mehr als 80 Gew.-% Propylen und Ethylen oder einem anderen $C_4$- bis $C_{12}$-Olefin nach Anspruch 29, das sich unter dem Mikroskop in Form von Teilchen darstellt, welche aus zwei aufrechten Kegelstümpfen bestehen, die sich an den größeren Grundflächen vereinigen und in Richtung der zu den Grundflächen senkrechten Symmetrieachse am Schnittpunkt der Umfangsfläche der Kegelstümpfe mit zwei durch diese Symmetrieachse verlaufenden orthogonalen Ebenen gekrümmt sind.

33. Polypropylen oder Propylencopolymer nach Anspruch 32, dadurch gekennzeichnet, daß die zwei Kegelstümpfe jedes Teilchens annähernd identisch und symetrisch sind.

34. Polypropylen oder Propylencopolymer nach Anspruch 32 oder 33, dadurch gekennzeichnet, daß die Teilchen eine Beziehung D/h von größerem Durchmesser "D" der Grundflächen zur Gesamthöhe "h" der zwei vereinigten Kegelstümpfe von 1 bis 2 aufweisen.

35. Polypropylen oder Propylencopolymer nach einem der Ansprüche 32 bis 34, dadurch gekennzeichnet, daß die Teilchen eine Beziehung D/d von größerem Durchmesser "D" des Teilchens zu größerem Durchmesser "d" der kleineren Grundflächen der Kegelstümpfe von 2 bis 4 aufweisen.

36. Polypropylen oder Propylencopolymer nach einem der Ansprüche 32 bis 35, dadurch gekennzeichnet, daß die Teilchen eine Beziehung R/E von größerem Radius "R" der größeren Grundfläche der Kegelstümpfe zum Abstand "E" zwischen dem Mittelpunkt dieser größeren Grundfläche und dem maximalen Krümmungspunkt dieser gleichen Grundfläche von 1,1 bis 1,5 aufweisen.

**37.** Polypropylen oder Propylencopolymer nach einem der Ansprüche 32 bis 36, dadurch gekennzeichnet, daß die Teilchen eine Beziehung r/e von größerem Radius "r" einer der beiden kleineren Grundflächen der Kegelstümpfe zum Abstand "e" zwischen dem Mittelpunkt dieser kleineren Grundfläche und dem maximalen Krümmungspunkt dieser gleichen Grundfläche von 1,1 bis 1,5 aufweisen.

**38.** Polypropylen oder Propylencopolymer nach einem der Ansprüche 32 bis 37, dadurch gekennzeichnet, daß dessen spezifische Oberfläche zwischen 0,1 und 3 $m^2$/g liegt.

**39.** Polypropylen oder Propylencopolymer nach einem der Ansprüche 32 bis 38, dadurch gekennzeichnet, daß die Teilchengröße zwischen 200 und 500 $\mu$m liegt, wobei die Teilchengrößenverteilung D90/D10 kleiner als 4 ist.

**40.** Polypropylen oder Propylencopolymer nach einem der Ansprüche 32 bis 39, dadurch gekennzeichnet, daß die Teilchen zu den $MgCl_2$-Teilchen nach einem der Ansprüche 1 bis 10 oder zu den Teilchen der Bestandteile nach einem der Ansprüche 20 bis 28 annähernd homothetisch sind.

Figure     1

Figure     2

03KV X1600   0041   10.0U SEM

PHOTO 1

03KV X200   0041   10.0U SEM

PHOTO 2

PHOTO 3

PHOTO 4

PHOTO 5

PHOTO 6

PHOTO 7

PHOTO 8